Europäisches Patentamt

European Patent Office     (11) Numéro de publication:     **0 358 586**

Office européen des brevets                                 A1

## (12) DEMANDE DE BREVET EUROPEEN

(21) Numéro de dépôt: 89440092.8     (51) Int. Cl.⁵: **B 64 F 5/00**

(22) Date de dépôt: 06.09.89

(30) Priorité: 07.09.88 FR 8811849

(43) Date de publication de la demande:
14.03.90 Bulletin 90/11

(84) Etats contractants désignés:
AT BE CH DE ES GB IT LI LU NL SE

(71) Demandeur: **Charton, Alain**
**Rue des Ecoles**
**F-57170 Chateau Salins (FR)**

(72) Inventeur: **Charton, Alain**
**Rue des Ecoles**
**F-57170 Chateau Salins (FR)**

(74) Mandataire: **Metz, Paul**
**Cabinet METZ PATNI 63, rue de la Ganzau B.P. 63**
**F-67024 Strasbourg Cédex (FR)**

(54) Préparateur d'eau chaude sous pression notamment pour unité mobile de dégivrage d'aéronefs.

(57) Préparateur d'eau chaude sous pression caractérisée en ce qu'il se compose en association, d'une cuve d'alimentation (9), d'un générateur-réchauffeur haute pression (10), d'un coupleur hydraulique (13), d'un accumulateur-réservoir (12) d'eau chaude, d'un groupe moto-pompe débitant sur une lance basse pression (18).

Cette invention intéresse notamment les exploitants d'aéroports.

FIG.2

# Description

## Préparateur d'eau chaude sous pression notamment pour unité mobile de dégivrage d'aéronefs.

La présente invention se rapporte à un préparateur d'eau chaude sous pression, pour appareils automoteurs de grandes dimensions, notamment aéronefs.

Les compagnies aériennes et plus généralement les pilotes et utilisateurs professionnels d'appareils aéronautiques connaissent les difficultés et les dangers liés au givre qui se dépose sur les bords d'attaque mais aussi, à moindre degré, sur toute la carlingue.

La couche de givre peut atteindre, dans certaines conditions atmosphériques, des épaisseurs jugées importantes.

Outre l'augmentation de poids apportée par la couche de givre, celle-ci modifie l'écoulement laminaire le long des ailes et de la carlingue.

Cette carapace de glace freine l'avion en augmentant sa composante de traînée due au poids supplémentaire et aux dégradations de ses caractéristiques de finesse.

Par ailleurs, les couches de givre se déposent de façon irrégulière selon leur densité dans les nuages et les différences de températures existant entre les diverses zones de l'appareil.

Elles constituent, en plus, des surfaces collantes sur lesquelles les flocons de neige en formation ou déjà constitués viennent s'agglutiner.

La présence de ces masses accolées aux parois extérieures représente un risque pour l'appareil en vol et divers systèmes existent déjà pour débarrasser les bords d'attaque des ailes.

Il s'agit des systèmes connus à eau chaude sous pression destinée à gonfler séquentiellement des ballonnets disposés le long des bords d'attaque des ailes et protégés par des bandes de caoutchouc noir.

Il s'avère donc impératif de débarrasser l'avion de sa carapace de givre avant tout nouveau décollage en hiver, en raison même de la surcharge provenant du poids du givre et du déséquilibre consécutif à la dispa rité des masses déposées et à la différence d'épaisseur variable selon leur localisation.

La présente invention a pour but de fournir un préparateur d'eau chaude sous pression en vue de débarrasser en une durée limitée la carlingue d'un avion de toutes les masses de givre accumulées en vol, dès son immobilisation sur le parking, après la sortie des passagers.

A cet effet, l'invention se rapporte à un préparateur à incorporer dans une installation mobile de dégivrage par projection haute pression, caractérisé en ce qu'il se compose, en association, d'une réserve, d'un générateur-réchauffeur haute pression, d'un coupleur hydraulique, d'un accumulateur-réservoir d'eau chaude à basse pression, d'une moto-pompe et d'une lance à effet de turbulence.

De nombreux avantages découlent de la présente invention :
. mise en oeuvre rapide et facile
. grande efficacité technique
. mobilité et caractère autonome

. multiplicité fonctionnelle : dégivrage, nettoyage et pompe d'incendie
. universalité d'usages.

Les caractéristiques techniques et d'autres avantages de l'invention sont consignés dans la description qui suit, effectuée à titre d'exemple non limitatif sur un mode d'exécution en référence aux dessins accompagnants dans lesquels :

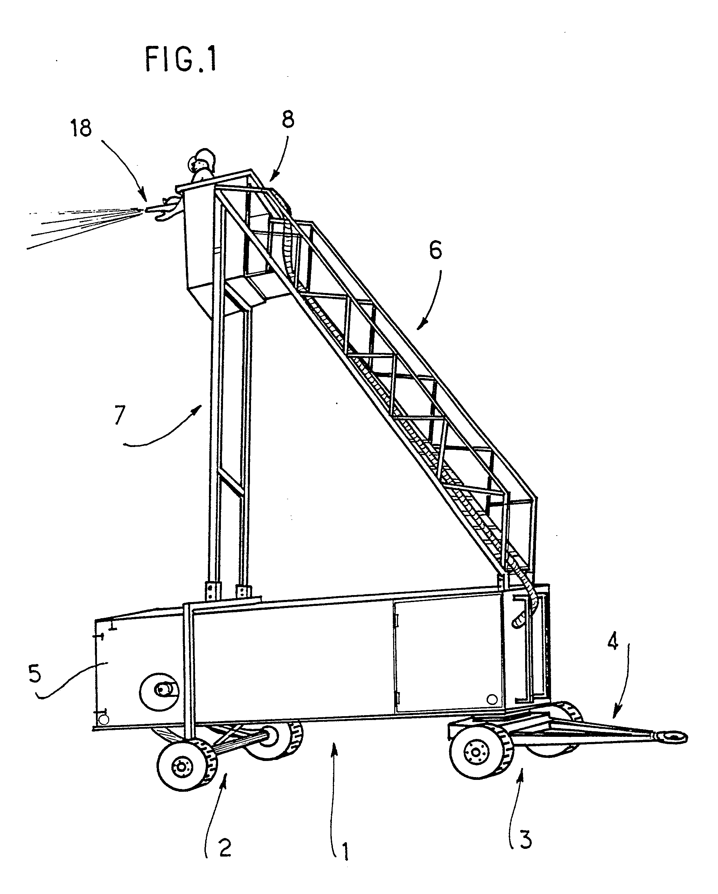

. La figure 1 est une vue en perspective simplifiée d'une installation mobile de dégivrage mettant en oeuvre le préparateur d'eau selon l'invention ;

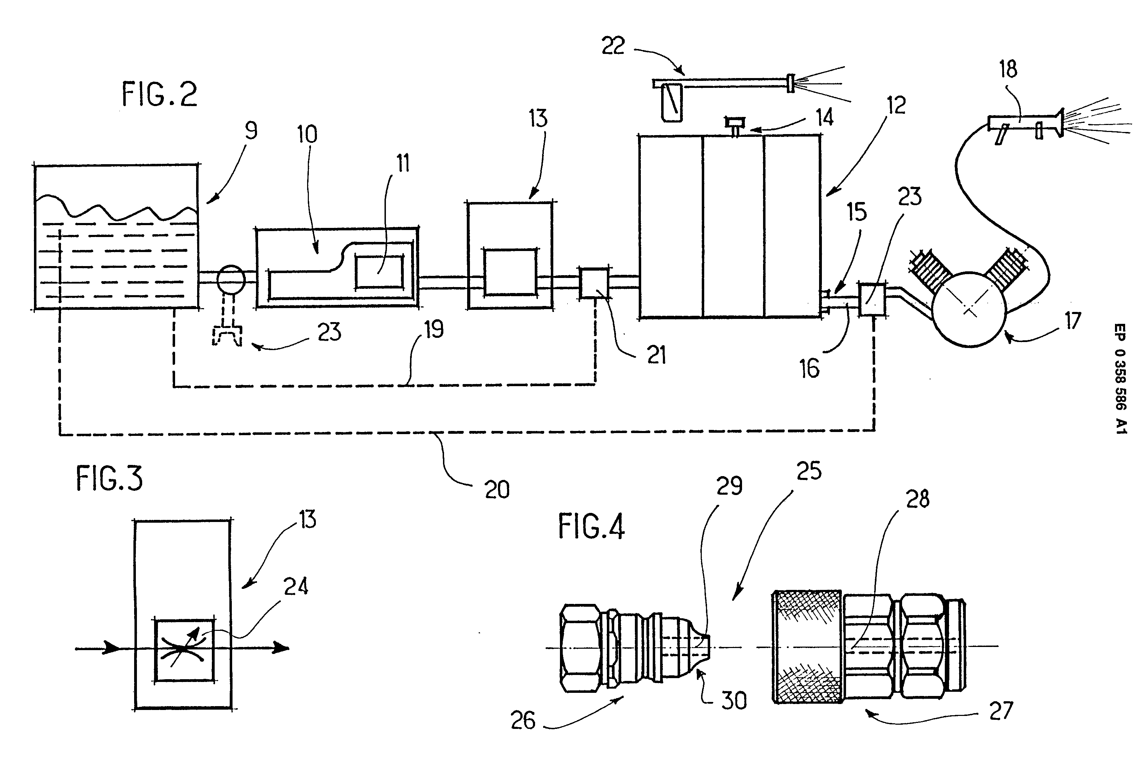

. la figure 2 est le schéma bloc fonctionnel du préparateur d'eau selon l'invention ;

. la figure 3 est le schéma d'un coupleur hydraulique ;

. la figure 4 est une vue de profil d'un exemple de réalisation du coupleur hydraulique utilisant un raccord rapide haute pression.

On examinera ci-après en détail les différents moyens associés constituant l'invention.

Il est bien entendu que les diverses variantes directes ou évidentes entrent dans son cadre.

L'ensemble de préparation d'eau chaude sous pression à incorporer dans une unité mobile de dégivrage pour aéronefs selon l'invention comporte une structure porteuse roulante, par exemple un châssis 1, porteur ou autoporteur, relié à un train de roues arrière 2 et à un train directeur avant 3 équipé d'un timon 4 lui conférant les caractéristiques générales d'une remorque à rond d'avant-train susceptible d'être tractée par un véhicule tracteur quelconque, notamment ceux utilisés sur les pistes des aéroports.

Le châssis 1 regroupe sur sa plateforme ou ses longerons, les principaux organes fonctionnels constituant le préparateur d'eau chaude et l'unité de dégivrage le contenant.

L'ensemble porté est protégé par une carrosserie 5 sur les montants de laquelle est montée pivotante une échelle intégrée rabattable 6 à échaffaudage d'appui 7 terminé par un godet 8 protégeant l'opérateur.

L'ensemble fonctionnel du préparateur d'eau chaude sous pression comporte tout d'abord une réserve d'alimentation 9 en eau, par exemple sous la forme d'une citerne ou d'une cuve fermée, d'un générateur haute pression 10 à un ou deux étages avec réchauffeur incorporé 11, alimentant un accumulateur-réservoir 12 d'eau chaude, par exemple compartimenté, à travers un coupleur hydraulique 13. Les compartiments communiquent entre eux. Il s'agit d'éviter le déplacement brutal des masses d'eau intérieures lors du roulage-traction.

L'accumulateur-réservoir compartimenté 12 comporte un thermostat de sécurité 14 et une sortie 15 communiquant par un conduit 16 avec un groupe moto-pompe 17 basse pression débitant sur une lance basse pression 18 à effet tourbillonnaire destinée à être utilisée soit directement sur les petits aéronefs, soit par l'emploi de l'échelle intégrée rabattable 6, soit, éventuellement, à l'aide de l'échelle de coupée.

L'accumulateur-réservoir compartimenté est de contenance relativement importante, par exemple 1000 litres. Il contient de l'eau chaude à environ 90°C sous pression atmosphérique.

L'eau est puisée dans l'accumulateur-réservoir compartimenté par le groupe moto-pompe 17 qui envoie le liquide sous basse pression à la lance 18 permettant de former des jets de longue portée qui atteignent les parties les plus éloignées de l'appareil.

Des portées horizontales d'environ 20 mètres pour le jet sont obtenues couramment alors que les portées verticales dépassent 10 mètres.

Grâce à l'échelle intégrée rabattable 6 portée par le châssis 1, il est possible d'atteindre toutes les parties des avions moyens courants.

L'eau est projetée à une pression de l'ordre de 6 à 8 bars à une température de 60 à 90°C.

Selon une variante, on utilise la réserve 9 d'eau comme citerne d'alimentation remplaçant l'accumulateur-réservoir 12 du groupe moto-pompe 17.

Il existe, dans cette variante, une liaison de retour 19 entre la sortie du coupleur hydraulique et la réserve 9 qui se remplit ainsi d'eau chaude.

Une deuxième liaison 20 dite d'utilisation relie la réserve 9 à l'entrée du groupe moto-pompe 17.

Bien entendu, la sortie du coupleur hydraulique 13 sera équipée d'une dérivation 21 permettant de brancher un pistolet haute pression 22 pour utiliser le générateur haute pression 10 de façon habituelle, par exemple à des fins de nettoyage par haute pression.

Pour ce faire, on prévoit une dérivation 23 de raccordement direct au réseau, par exemple urbain, de distribution d'eau.

On décrira maintenant ci-après, plusieurs formes de réalisation du coupleur hydraulique 13 qui a pour but de maintenir en pression le circuit de sortie du générateur haute pression 10.

La fonction hydraulique générale est celle d'un étrangleur permettant de freiner le liquide de sortie en vue de réaliser les conditions de fonctionnement du générateur haute pression 10.

A titre d'exemple, on peut citer un gicleur 24, de préférence du type dit à "mince paroi", tel que représenté schématiquement sur la figure 3 ou un coupleur 25 haute pression à raccordement rapide adapté à cette fonction.

Une forme de réalisation de cette dernière variante est représentée sur la figure 4.

Les deux raccords mâle 26 et femelle 27 de ce coupleur à raccordement rapide présentent un passage hydraulique direct 28 par exemple par perçage 29 du pointeau mobile 30 dans le raccord mâle et par suppression du pointeau dans le raccord femelle.

Cette variante offre l'avantage supplémentaire important de permettre le remplacement rapide lors d'interventions de dépannage ou d'entretien, par exemple pour des raisons d'entartrage.

D'autres variantes à gicleur ou à buse peuvent également être envisagées.

L'invention a été décrite ci-dessus en détail. Il est bien entendu cependant que diverses modifications simples, adjonctions, variantes directes, substitutions par des moyens équivalents entrent dans le cadre de la présente protection.

## Revendications

1. Préparateur d'eau chaude sous pression pour unité mobile de dégivrage d'aéronefs et, plus généralement, de véhicules de grandes dimensions, monté sur un châssis équipé de trains de roues, caractérisé en ce qu'il se compose d'une réserve d'alimentation (9) en eau reliée à un générateur haute pression (10) à réchauffeur (11) incorporé, ledit générateur alimentant un accumulateur-réservoir (12) d'eau chaude à travers un coupleur hydraulique (13), le circuit se terminant par un groupe moto-pompe (17) débitant sur une lance basse pression (8) portée par un châssis roulant, sur les montants de la carrosserie duquel est montée une échelle rabattable (6) à échaffaudage d'appui (7) terminé par un godet (8) protégeant l'opérateur.

2. Préparateur selon la revendication 1, caractérisé en ce que l'accumulateur-réservoir (12) est la cuve de la réserve d'alimentation (9).

3. Préparateur selon les revendications 1 ou 2, caractérisé en ce que le coupleur hydraulique (13) est un gicleur mince paroi(24).

4. Préparateur selon les revendications 1 ou 2, caractérisé en ce que le coupleur hydraulique (13) est un coupleur (25) à raccordement rapide dont le pointeau mobile de la pièce mâle est percé et le pointeau de la pièce femelle enlevé.

5. Préparateur selon les revendications précédentes, caractérisé en ce que la sortie du coupleur hydraulique (13) présente une dérivation pour le branchement d'un pistolet haute pression (22).

6. Préparateur selon la revendication 1, caractérisé en ce que la lance basse pression (18) est à effet tourbillonnaire.

FIG.1

FIG.2

FIG.3

FIG.4

Office européen
des brevets

RAPPORT DE RECHERCHE EUROPEENNE

Numero de la demande

EP  89 44 0092

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 032 090  (THORNTON-TRUMP)<br>* Résumé *<br>--- | 1 | B 64 F    5/00 |
| A | US-A-3 243 123  (INGHRAM)<br>* Colonne 3, ligne 42 - colonne 4, ligne 15 *<br>--- | 1 | |
| A | EP-A-0 030 454  (FMC CORP.)<br>* Page 11, lignes 8-10 *<br>----- | 1 | |

DOMAINES TECHNIQUES RECHERCHES (Int. Cl.5)

B 64 F
B 60 P
B 60 S

Le présent rapport a été établi pour toutes les revendications

| Lieu de la recherche | Date d'achèvement de la recherche | Examinateur |
|---|---|---|
| LA HAYE | 25-11-1989 | HAUGLUSTAINE H.P.M. |